Europäisches Patentamt

European Patent Office

Office européen des brevets

(19)

(11) Veröffentlichungsnummer : **0 093 894**
**B1**

(12) **EUROPÄISCHE PATENTSCHRIFT**

(45) Veröffentlichungstag der Patentschrift :
02.01.86

(21) Anmeldenummer . 83103659.5

(22) Anmeldetag : 15.04.83

(51) Int. Cl.⁴ : **B 29 C 47/12**

(54) Werkzeug für Extruder.

(30) Priorität : 06.05.82 DE 3216918

(43) Veröffentlichungstag der Anmeldung :
16.11.83 Patentblatt 83/46

(45) Bekanntmachung des Hinweises auf die Patenterteilung : 02.01.86 Patentblatt 86/01

(84) Benannte Vertragsstaaten :
AT BE CH DE FR GB IT LI LU NL SE

(56) Entgegenhaltungen :
AT-B-  339 581
US-A- 4 321 228
Kunststoff-Maschinenführer,Dipl.-Ing.  H.Schaab und
Dr. Klaus Stoeckhert, Carl Hanser Verlag München
Wien 1979,Seiten 54 bis 57

(73) Patentinhaber : DYNAMIT NOBEL AKTIENGESELLS-
CHAFT
Postfach 1209
D-5210 Troisdorf, Bez. Köln (DE)

(72) Erfinder : Tietz, Siegfried
Siebengebirgsweg
D-5202 Hennef 1 (DE)
Erfinder : Langel, Matthias
Hauptstrasse 127
D-5210 Troisdorf-Spich (DE)
Erfinder : Wissinger, Waldemar
Im Urnenfeld 19
D-5200 Siegburg (DE)
Erfinder : Kurth, Josef
Am Hang 20a
D-5210 Troisdorf (DE)

EP 0 093 894 B1

## Beschreibung

Die Erfindung bezieht sich auf ein Werkzeug für Extruder mit einem eingearbeiteten Fließkanal mit Verdrängerkernen zum Formen eines plastifizierten Kunststoffmassestromes in einen Hohlkammern aufweisenden Profilquerschnitt, wobei das Werkzeuggehäuse aus mehreren Werkzeugteilen mit vertikalen und/oder horizontalen Teilungsebenen zusammengesetzt ist und die Verdrängerkerne im Fließkanal über Kernhaltestege mit dem Werkzeuggehäuse verbunden sind, welche Kernhaltestege im Bereich der Durchdringung des Fließkanals diesen unterbrechen und dabei den Massestrom in Teilströme unterteilen.

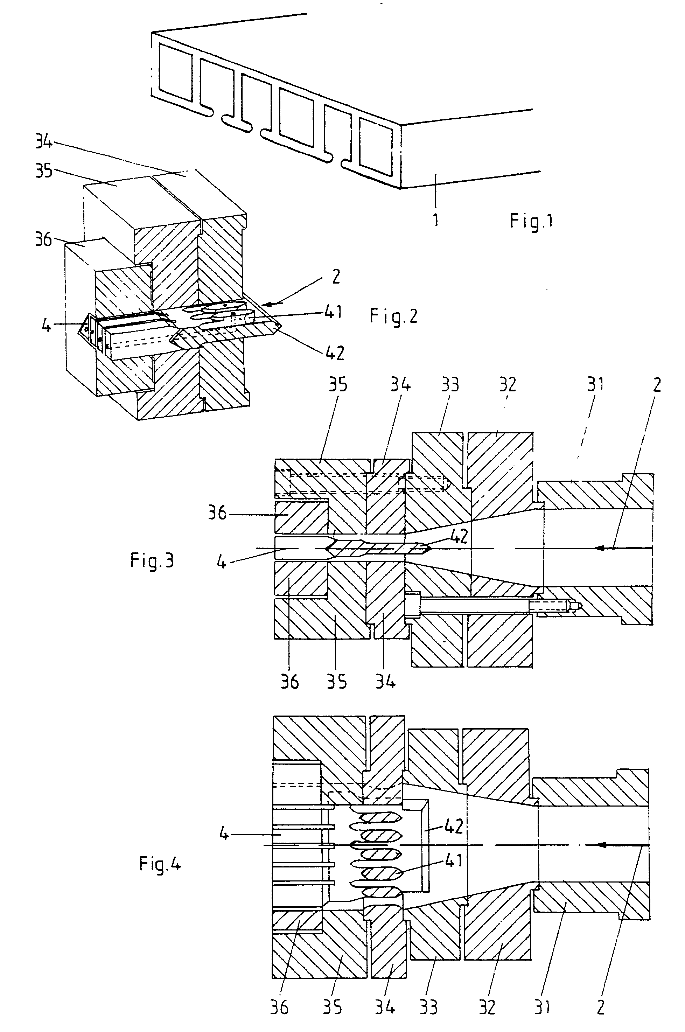

Im Kunststoff-Maschinenführer, herausgegeben von Dipl.-Ing. H. Schaab und Dr. Klaus Stoeckhert, Carl Hanser Verlag München Wien 1979, Seiten 54 bis 57 u. a. werden Profilwerkzeuge zum Formen von Hohlkammerprofilen aus extrudierten thermoplastischen Kunststoffmassen beschrieben. In der Zeichnung, den Figuren 1 bis 4 wird eine kurze Erläuterung des bekannten Standes der Technik gegeben. In der Fig. 1 ist beispielsweise ein mehrkammriges Kunststoffhohlprofil ausschnittsweise dargestellt, das aus einem in einem Extruder plastifizierten Kunststoffmassestrom in dem vorgeschalteten Werkzeug geformt werden soll. Das Werkzeug ist Schematisch in Teilansicht in der Fig. 2 dargestellt. Der vom Extruder ankommende Massestrom 2, der normalerweise mit einem zylindrischen Vollquerschnitt ankommt, wird in dem Werkzeug auf das gewünschte Profil geformt. Das Werkzeug ist schon aus fertigungstechnischen Gründen zur Einarbeitung des oftmals kompliziert gestalteten mit Hohlkammern versehenen und teilweise hinterschnittenen Profilquerschnittes aus mehreren Werkzeugteilen zusammengesetzt. Der Massestrom 2 wird über Verdrängerdorne 4 zu dem Hohlstrang geformt. Aus dem Querschnitt nach Fig. 3 ist die Veränderung des Fließkanals zu erkennen. Das Werkzeug ist aus den Werkzeugteilen 31 bis 36 zusammengesetzt, wobei der Teil 31 noch den zylindrischen Querschnitt im Übergang zum Zylinder aufweist, die Teile 32, 33 eine konische Verjüngung und gleichzeitige Verbreiterung entsprechend der gewünschten Profilform überleiten. Das Gehäuseteil 34 wird als Kernhaltergehäuseteil benutzt und die anschließenden Gehäuseteile 35 und 36 dienen zum Werkzeugaustritt und zur endgültigen Profilgebung. Hierbei wird das Gehäuseteil 36 auch als Profildüse bezeichnet. Im Fließkanal des Massestromes 2 sind die Verdrängerkerne 4 angeordnet mit der strömungstechnisch günstig geformten Verdrängerspitze 42. Die Fig. 4 zeigt den Längsschnitt in Aufsicht auf das Werkzeug nach Fig. 3 bzw. 2. Hier sind deutlich die Kernhaltestege 41 zu erkennen, die die Verdrängerkerne 4 mit dem Werkzeugteil 34 verbinden und damit für die richtige Lage der Verdrängerkerne im Werkzeug sorgen.

Bei Extrusionswerkzeugen zur Verarbeitung viskoelastischer Kunststoffschmelzen, beispielsweise Hart-PVC-Schmelzen muß der Fließkanal im Werkzeug sehr sorgfältig auf die gewünschte oft recht komplizierte Profilquerschnittkontur abgestimmt sein. Die Formgebung des Fließkanals hat auch wesentliche Auswirkungen auf den Spannungszustand und das Fließverhalten der Kunststoffschmelze. Die vom Extruder plastifizierte homogen aufgeschmolzene Schmelze wird als Massestrom 2 vom Extruder kommend in einen kreisförmigen Drosselkanal gefördert und gelangt im Übergang eines meistens konisch profilierten Bereiches in den sogenannten Vorformbereich des Werkzeuges, wo die Verdrängerkerne beginnen, siehe beispielsweise die Figuren 2 bis 4. Die Außenkontur dieses Vorformbereiches ist bereits auf die gewünschte Außenkontur des fertigen Profils abgestimmt, in den gezeigten Beispielen, und allgemein üblich verläuft diese Außenkontur aus dem Vorformbereich, d. h. aus dem Werkzeugebereich 34 bis zum Profildüsenbereich 36 und Austritt des Profiles aus dem Werkzeug parallel. Durch die Verdrängerkerne wird im Vorformbereich aus dem Vollprofil des Massestromes 2 das Hohlprofil geformt. Im Profildüsenbereich wird die Schmelze nur noch verfeinert und zur endgültigen Form geformt und verläßt das Werkzeug als profilierter Schmelzestrang, dessen endgültige Form sich nach Freiwerden der elastischen Spannungen durch Wegnahme des äußeren Druckes einstellt.

Es ist bei solchen Werkzeugen sehr problematisch, daß im Vorformbereich aufgrund der notwendigen Halterung der Verdrängerkerne am Werkzeuggehäuse die Formgebung nur teilweise wie gewünscht vorgenommen werden kann und aufgrund dessen der Spannungszustand der Schmelze durch die Kernhalterung negativ beeinflußt wird. Die Kernhaltestege, die als den Fließkanal beengende Bereiche und Schmelzeverdränger im Fließkanal wirken, geben dem Massestrom einen ungünstigen Spannungszustand, wodurch die Fließrichtlinien nicht mehr parallel laufen, sondern es zu Querströmungen kommt, aufgrund dessen der sich aus dem Werkzeug austretende Profilstrang sehr stark verzerren kann. Dieser Spannungszustand bzw. diese Verzerrung kann nur teilweise im Profildüsenbereich ausgeglichen werden. Hinzu kommt, daß bei dünnwandigen Profilen durch die Massestromverdrängung im Bereich der Kernhalterstege sich an der Außenseite Markierungen bilden, sogenannte Fließnahtmarkierungen, die unerwünscht sind.

Der Erfindung liegt die Aufgabe zugrunde, Werkzeuge zum Verarbeiten von viskoelastischen Kunststoffschmelzen zur Formgebung für Hohlkammerprofile in ihrer Gestaltung zu verbessern, so daß das Auftreten von zusätzlichen Spannungen durch die Formgebung im Werkzeug vermieden wird, bzw. herabgesetzt wird und Fließkanalverengungen durch die Kernhalterung vermieden werden.

Die Erfindung löst die Aufgabe für ein Werkzeug der eingangs genannten Art dadurch, daß der durch die Verdrängerkerne zum Profilquerschnitt geformte Massestrom vor dem Bereich der Kernhaltestege in Teilströme unterteilt wird, wobei der Querschnitt der zusammengesetzten Teilströme gleich dem Querschnitt des ungeteilten Massestromes ist und die Verdrängerkerne im Bereich der Kernhaltestege um die Dicke der Kernhaltestege vergrößert sind, so daß die Teilströme mit gleichbleibenden Fließquerschnitten seitlich an den Kernhaltestegen über die Verdrängerkernerhebung geleitet werden.

Mit der Erfindung wird praktisch das Hindernis der Kernhaltestege in dem Fließkanal beseitigt, in dem der vom Extruder kommende Massestrom im Vorformbereich durch die frei in den Massestrom ragenden Verdrängerkerne zu dem gewünschten Profilquerschnitt vorgeformt und dann dieser Profilquerschnitt aufgeschnitten wird und strömungsgünstig die Teilströme über auf den Verdrängerkernen angebrachte Erhebungen, die in der Größe den Verengungen des Fließkanales durch die Stege entsprechend strömungsgünstig umgeleitet werden. Auf diese Weise bleibt die Größe und geformte Gestalt des Profilquerschnittes erhalten und keine Verdrängung bzw. Verengung des Massestromes im Fließkanal findet statt. Auf diese Weise werden dann auch keine zusätzlichen Spannungen und Verzerrungen in den Massestrom gebracht. Nach dem Umfließen der Kernhaltestege werden die Teilströme wieder zu dem gleichen Profil wie vor der Aufteilung zusammengefügt und die Schmelze verschweißt homogen an den Fügestellen und fließt gleichmäßig zur Profildüse und abschließenden Formgebung weiter. Mit der Erfindung ist der kritische Bereich der Kernhalterung im Vorformungsbereich des Profilquerschnittes aus dem Massestrom so gelöst, daß keine Materialverdrängungen oder Querschnittsverengungen mehr stattfinden. Durch Umfließen bzw. Umleiten der geteilten Masseströme um die Kernhalterungsbereiche wird ein gleichmäßiges paralleles Fließverhalten erreicht und das zusätzliche Auftreten von Spannungen und Verzerrungen vermieden. Lediglich die Fließwege werden im Bereich der Umlenkung etwas länger. Wenn man hier die gleiche Fließgeschwindigkeit erhalten will, so muß ein entsprechender Widerstand in den Fließweg eingebaut werden, um die Fließgeschwindigkeit konstant zu halten.

Für eine günstige Gestaltung des Werkzeuges für die Ausführung der Erfindung wird vorgeschlagen, daß beidseitig der Kernhaltestege das Werkzeuggehäuse ebenfalls unterteilt ist. Auf diese Weise ist eine einfache Gestaltung bzw. Ausarbeitung des Fließkanals auch im umzulenkenden Bereich im Sinne der Erfindung möglich.

Die erfindungsgemäße Ausgestaltung eines Werkzeuges kann mit besonderem Vorteil für mehrkammrige Hohlprofile angewendet werden. Je nach Gestalt und Ausbildung des Hohlprofils ist es beispielsweise auch möglich, sowohl die herkömmliche Art der Anordnung von Kernhalterungen für die Verdrängerkerne mit der erfindungsgemäß gestalteten umgelenkten Fließkanalgestaltung von Teilbereichen zu kombinieren.

Die Erfindung wird nachfolgend an Ausführungsbeispielen in der Zeichnung noch näher erläutert.

Es zeigen die

Figur 1 ein mehrkammriges Kunststoffprofil in teilweiser Ansicht,

Figur 2 einen perspektivischen Ausschnitt aus einem Werkzeug herkömmlicher Bauweise für ein Profil nach Fig. 1,

Figur 3 + 4 einen vertikalen und horizontalen Schnitt durch das Werkzeug nach Fig. 2,

Figur 5 einen schematischen Längsschnitt durch ein erfindungsgemäß ausgebildetes Werkzeug,

Figur 6-11 die vertikalen Schnitte A-B bis L-M durch das Werkzeug nach Fig. 5,

Figur 12 einen schematischen Längsschnitt durch ein Profilwerkzeug herkömmlicher Bauweise für den gleichen Profilquerschnitt gem. Fig. 5,

Figur 13-19 die vertikalen Querschnitte A-B bis L-M und den horizontalen Teilquerschnitt N-O durch das Werkzeug nach Fig. 12,

Figur 20 einen schematischen Längsschnitt durch ein kombiniertes Werkzeug nach der Bauweise von Fig. 5 und Fig. 12,

Figuren 21-26 die vertikalen Querschnitte A bis M durch das Werkzeug nach Figur 20.

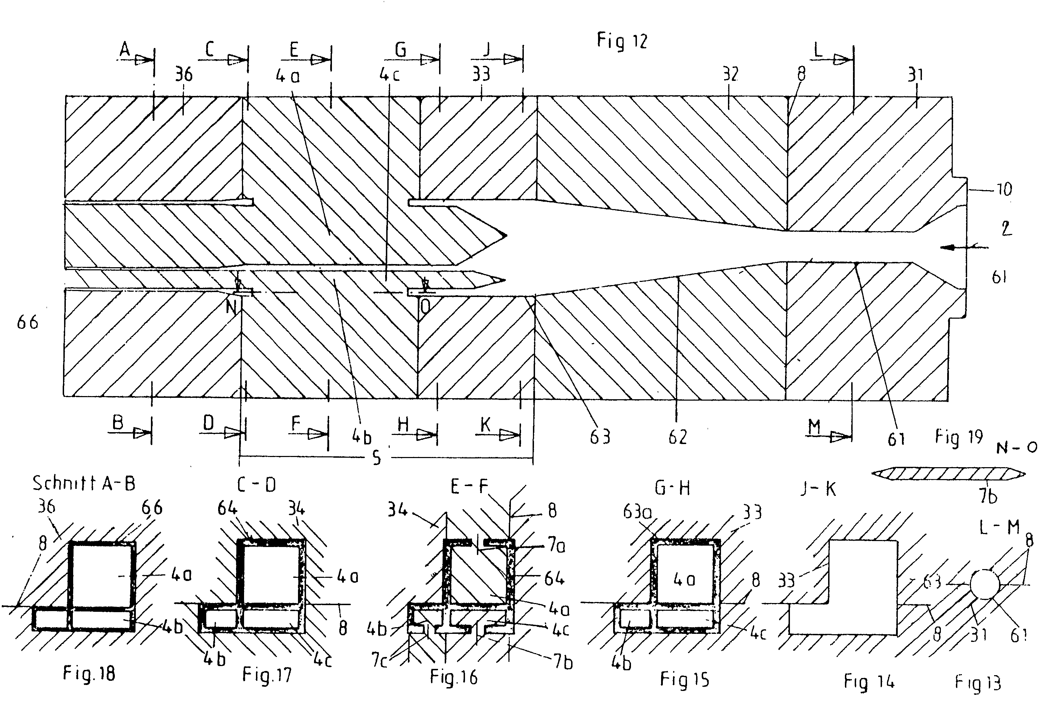

In der Figur 12 ist im Längsschnitt ein Werkzeug dargestellt, das zum Formen eines Profiles gemäß Querschnitt von Figur 18 aus einer in einem Extruder ausgeschmolzenen thermoplastischen Kunststoffmasse geformt werden soll. Das Werkzeug nach Fig. 12 ist an der Stirnfläche 10 an den Extruder angeflanscht, aus dem der Massestrom 2 in das Werkzeug eintritt. Beim Durchlaufen durch das Werkzeug wird der anfängliche kreisrunde Fließquerschnitt 61 im Einlaufbereich im Werkzeugteil 31, siehe auch Querschnitt Fig. 13, überführt in den gewünschten Profilquerschnitt 66 im Auslaufbereich in der Profildüse 36, siehe Fig. 18. Um die Hohlkammern des Profiles auszubilden, ist es notwendig, daß der Massestrom 2 durch in den Fließkanal eingebaute entsprechend geformte Verdrängerkerne aufgeteilt und umverteilt wird. Diese Verdrängerkerne müssen jedoch mindestens an einer Stelle an dem das Gehäuse bildenden Werkzeug befestigt, bzw. mit diesen verbunden sein, da sie ja nicht lose im Massestrom schwimmen können. Der vom Extruder kommende Massestrom wird normalerweise über einen kreisförmigen Drosselkanal 61, siehe Fig. 13, in einen konisch sich erweiternden Bereich 62 des Fließkanals, der am Ende bereits die Außenabmessungen des gewünschten Profilquerschnittes aufweist, überführt. Danach kommt der Massestrom in den sogenannten Vorformbereich 5, in dem die Verdrängerkerne aufgehängt sind. Zuerst wird der Massestrom durch die freien Spitzen der Verdrängerkerne 4a, 4b, 4c in die gewünschte Profilform umgelenkt, siehe Fig. 15. Dann kommt der Bereich, in dem die Verdrängerkerne 4a, 4b, 4c zumindest in einem seitlichen Bereich jeweils mit dem Werkzeuggehäuseteil 34 verbunden sind, siehe den in Fig. 19 dargestellten Querschnitt N-O, mittels der Stege 7b. In diesem Bereich der Stege 7b ist der Fließkanal verengt, d. h. der Massestrom unterbrochen.

Der Schnitt E-F nach Fig. 16 zeigt deutlich die Verengungsstellen 7a, 7b, 7c, an denen die Verdrängerkerne 4a, 4b, 4c mit den Werkzeugteilen verbunden sind. Im Auslaufbereich sind dann die Verdrängerkerne 4a, 4b, 4c wiederum frei im Fließkanal, das betrifft insbesondere den Bereich der Profildüse 36, wie die Fig. 17 und 18 zeigen. Im Profildüsenbereich wird dem vorgeformten Profil die gewünschte Feinabmessung verpaßt. Durch die in der Fig. 16 zu ersehende Fließkanalverengung im Bereich der Aufhängung der Verdrängerkerne entsteht eine erhebliche Verzerrung des Massestromes und damit zusätzliche Spannungen innerhalb des Massestromes, die sich später beim Erstarren der Profile als nachteilig erweisen. Darüber hinaus kann es zu Unregelmäßigkeiten beim Wiederzusammenführen der Masseströme nach der Kernhalterung, im Bereich des Schnittes C-D, siehe Fig. 17 kommen, so daß an der Sichtfläche der Profile diese Zusammenfließstellen später durchaus noch kenntlich sind, was unerwünscht ist. Das in den Figuren 12 bis 19 schematisch dargestellte Werkzeug weist vertikale und horizontale Teilungen auf, um eine entsprechende Fließkanalgestaltung in den einzelnen Bereichen vornehmen zu können. Die Teilungen bzw. Teilungsebenen sind jeweils mit 8 bezeichnet.

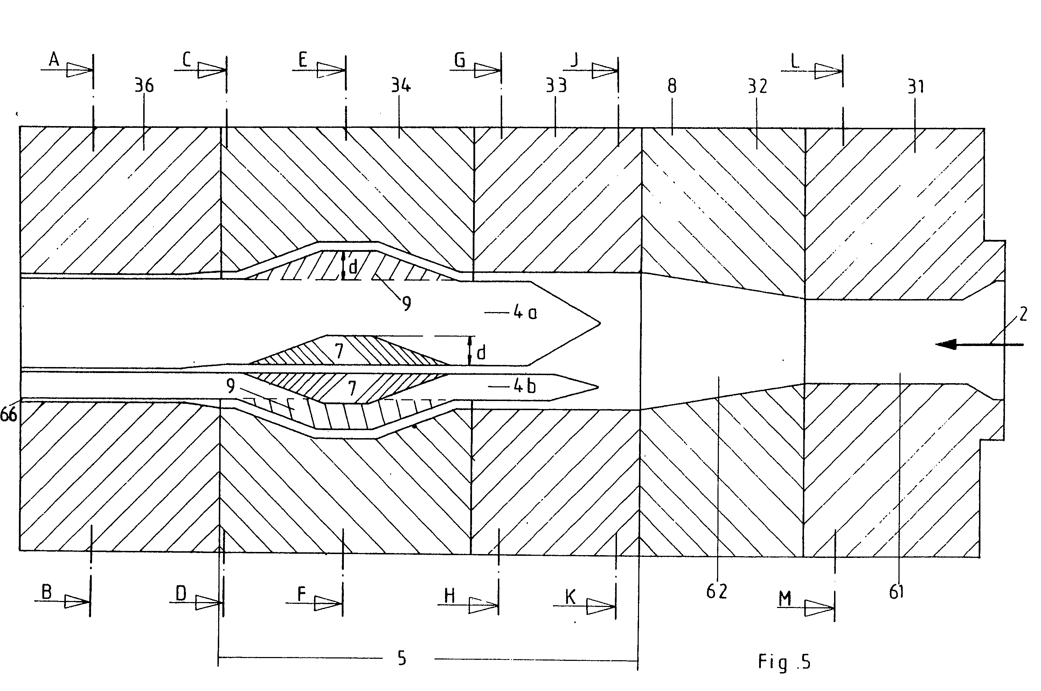

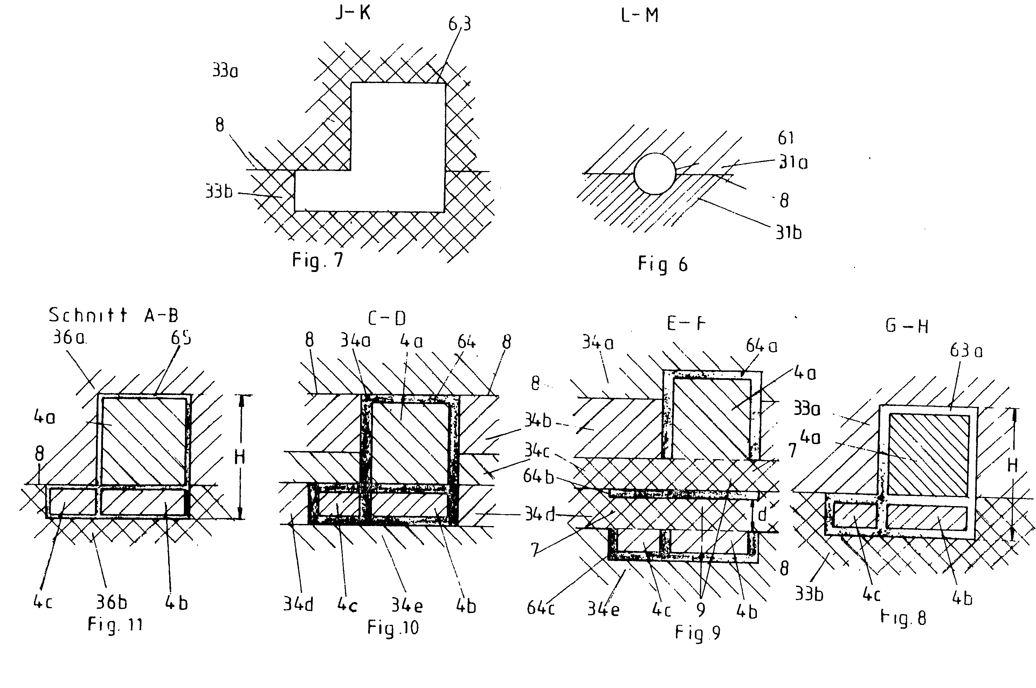

Gemäß der Erfindung wird die Führung des Massestromes im Bereich der Kernhalterung, die ja notwendig ist, auf eine neuartige Weise gelöst. Wie aus der Fig. 5 zu ersehen ist, wird bei einem analogen Aufbau des Werkzeuges gemäß Fig. 12, jedoch der Vorformbereich 5 mit den Verdrängerkernen 4a, 4b und 4c neu gestaltet. Der Bereich, in dem die in dem gezeigten Längsschnitt sichtbaren Kerne 4a, 4b seitlich mit dem Werkzeugteil 34 verbunden sind, die sogenannten Stege, sind mit 7 schräg schraffiert gekennzeichnet. Um eine Verengung des Fließkanales im Bereich dieser Stege 7 zu vermeiden, werden die Verdrängerkerne um die Dicke d der Stege 7 in diesem Bereich nach außen vergrößert, siehe der Bereich 9. Dies bedeutet zwangsläufig eine Umlenkung des Fließkanals in diesem Bereich. Durch die Umlenkung wird zwar ein etwas längerer Fließweg für den Massestrom bewirkt, aber gleichzeitig die Verkleinerung des Fließquerschnittes durch die Kernhalterung, d. h. die Stege 7 vermieden. Aus den Querschnitten gemäß den Figuren 6 bis 11 ist die Wirkungsweise der Erfindung zu ersehen. Der anfängliche kreisrunde Drosselkanal 61 gemäß Fig. 6 wird im ersten Bereich wiederum auf die äußere Kontur des gewünschten Profiles aufgeweitet, siehe Fließquerschnitt 63 nach Fig. 7 und dann im Vorformbereich im Bereich der freien Spitzen der Verdrängerkerne auf die gewünschte Profilform mit mehreren Hohlkammern aufgeteilt, siehe Fig. 8. Im Bereich der Kernaufhängung 4a, 4b und 4c wird nunmehr für die Stege 7 der Verdrängerkern um den Bereich 9 nach außen vergrößert, so daß der Profilquerschnitt des Fließkanals gemäß Fig. 8 seitlich der Stege 7 aufgeschnitten wird und um den Bereich 9 jeweils nach außen verlagert. Die dadurch entstehenden Teilströme oder Teilfließquerschnitte 64a, 64b und 64c ergeben zusammengesetzt wiederum den Fließquerschnitt 63a nach Fig. 8 und auch wiederum nach Durchlaufen des Kernhaltebereiches den Fließquerschnitt 64 nach Fig. 10. Damit wird jedoch ein spannungsfreies Umfließen des Kernhaltebereiches der Verdrängerkerne erzielt, wodurch eine verbesserte Qualität und Genauigkeit insbesondere bei komplizierten Hohlkammerquerschnitten von Profilen erzielt wird. Die Höhe H der Außenkontur wird bereits im Beginn des Vorformbereiches, siehe Fig. 8 erreicht und entspricht noch derjenigen im Auslaufbereich der Profildüse 36, siehe Fig. 11. Die einzelnen Werkzeugteile 31 bis 34 und 36, die durch die vertikale Unterteilung des Werkzeuges in Fließrichtung vorhanden sind, sind darüber hinaus noch zusätzlich in horizontalen Ebenen je nach Profilgestaltung unterteilt. Die Teilungsebenen sind durchgehend mit 8 bezeichnet. Die durch die horizontale Teilung zusätzlich entstehenden unterteilten Werkzeugteile sind jeweils mit zusätzlichen kleinen Buchstaben a bis e gekennzeichnet.

Gemäß der Erfindung wird der im Vorformbereich des Werkzeuges geformte Profilstrang in einzelne Teilströme oder Teilprofile aufgeschnitten und diese werden über an den Verdrängerkernen ausgebildete Erhebungen geleitet, wobei diese quer zur Fließrichtung angeordnet sind. Nach dem Überfließen der Erhebungen werden die Teilströme wieder zur ursprünglichen ggf. auch zu einem veränderten Profilquerschnitt zusammengeführt, wobei für diesen Bereiche eine Verringerung des Gesamtfließquerschnittes vermieden ist.

In der Fig. 20 ist die Kombination von Kernaufhängung nach dem alten Verfahren unter Einschnürung des Fließquerschnittes und dem erfindungsgemäßen Verfahren unter Beibehaltung des Fließquerschnittes im Bereich der Kernhalterung dargestellt. Im Bereich des Verdrängerkernes 4a wird dieser über die Stege 7b mit dem Werkzeugteil 34 verbunden. Im Bereich der Durchdringung der Stege 7b zum Fließkanal 64 wird dieser um die Stegdicke verengt. Im Bereich des Verdrängerkernes 4b ist dieser mit dem Steg 7a an dem Werkzeugteil 34 verankert, jedoch ist der Verdrängerkern 4b seitlich um die Größe des Steges 7a vergrößert, wodurch eine Umlenkung des Massestromes in diesem Bereich ermöglicht wird. Die Umlenkung entspricht der Stegdicke 7a, so daß keine Verkleinerung des Fließquerschnittes stattfindet. Damit findet auch keine Beeinträchtigung oder ein zusätzlicher Einfluß auf den Massestrom statt, der zu dem Aufbau von Spannungen führen könnte. Die Fig. 21 bis 26 zeigen wiederum die vertikalen Fließquerschnitte an den einzelnen Bereichen des Werkzeuges. Es ist durchaus denkbar, je nach Profilgestaltung, eine solche kombinierte Ausführung vorzunehmen.

## Patentansprüche

1. Werkzeug für Extruder mit einem eingearbeiteten Fließkanal (61-66) mit Verdrängerkernen (4a, b, c) zum Formen eines plastifizierten Kunststoffmassestromes (2) in einen Hohlkammern aufweisenden Profilquerschnitt, wobei das Werkzeuggehäuse aus mehreren Werkzeugteilen (31-34, 36) mit vertikalen und/ oder horizontalen Teilungsebenen zusammengesetzt ist und die Verdrängerkerne im Fließkanal über Kernhaltestege (7) mit dem Werkzeuggehäuse verbunden sind, welche kernhaltestege im Bereich der Durchdringung des Fließkanales diesen unterbrechen und dabei den Massestrom in Teilströme unterteilen, dadurch gekennzeichnet, daß der durch die Verdrängerkerne (4a, b, c) zum Profilquerschnitt (63a) geformte Massestrom vor dem Bereich der Kernhaltestege (7) in Teilströme (64a, b, c) unterteilt wird, wobei der Querschnitt der zusammengesetzten Teilströme gleich dem Querschnitt des Massestromes ist und die Verdrängerkerne (4a, b, c) im Bereich der Kernhaltestege (7) um die Dicke (d) der Kernhaltestege vergrößert sind, so daß die Teilströme mit gleichbleibenden Fließquerschnitten seitlich an den Kernhaltestegen über die Verdrängerkernerhebung (9) geleitet werden.

2. Werkzeug nach Anspruch 1, dadurch gekennzeichnet, daß beidseitig der Kernhaltestege (7) das Werkzeuggehäuse unterteilt ist.

## Claims

1. A tool for an extruder having incorporated therein a flow channel (61-66) with displacement cores (4a, b, c) for forming a flow of plasticised plastics material into a profile cross-section possessing hollow chambers, with the tool housing being composed of a plurality of tool parts (31-34, 36) with vertical and/or horizontal partition planes and the displacement cores being connected in the flow channel with the tool housing by means of core holding webs, which core holding webs interrupt this in the region of the penetration of the flow channel and subdivide the flow of material into part flows, characterised in that the flow of material shaped by the displacement cores (4a, b, c) to the profile cross section (63a) is subdivided into part flows (64a, b, c) before the region of the core holding web (7), with the cross-section of the combined part flows being equal to the cross-section of the flow of material and the displacement cores (4a, b, c) being enlarged in the region of the core holding webs (7) by approximately the thickness (d) of the core holding webs so that the part flows, with the constant flow cross-sections, are conducted laterally onto the core holding webs over the displacement core projection (9).

2. Tool according to claim 1, characterised in that the tool housing is subdivided on both sides of the core holding webs (7).

## Revendications

1. Outil d'extrusion, avec un canal d'écoulement (61, 66) usiné dans l'outil et muni de noyaux de refoulement (4a, b, c) pour modeler un flux de masse (2) de matière synthétique plastifiée en une section de profilé présentant des cavités, le carter de l'outil étant constitué de plusieurs parties (31-34, 36) ayant des plans de joint verticaux et/ou horizontaux, et les noyaux de refoulement présents dans le canal d'écoulement étant assemblés au carter de l'outil par l'intermédiaire de nervures (7) de retenue, lesquelles interrompent le canal d'écoulement au niveau de la pénétration de ce dernier, et divisent alors le flux de masse en flux partiels, caractérisé par le fait que le flux de masse modelé par les noyaux de refoulement (4a, b, c) en section de profilé (63a) est divisé en flux partiels (64a, b, c) en amont des nervures (7) de retenue des noyaux, la section des flux partiels rassemblés étant égale à la section du flux de masse, et les noyaux de refoulement (4a, b, c) étant, au niveau des nervures (7) de retenue des noyaux, augmentés de l'épaisseur (d) de ces nervures, de sorte que les flux partiels sont dirigés latéralement sur les nervures de retenue par l'intermédiaire de la bosse (9) des noyaux, ce avec des sections d'écoulement non modifiées.

2. Outil d'extrusion selon la revendication 1, caractérisé par le fait que le carter de l'outil est divisé des deux côtés des nervures (7) de retenue des noyaux.

0 093 894

Fig.1

Fig.2

Fig.3

Fig.4

1

0 093 894

Fig. 5

J-K

6,3

33a

8

33b

Fig. 7

L-M

61
31a
8
31b

Fig 6

Schnitt A-B

36a  65

4a

8

H

4c  36b  4b

Fig. 11

C-D

8  34a  4a  64  8

34d  4c  34e  4b

Fig.10

E-F

34a  64a

8
34b
34c
64b
34d
7

64c  34e  4c  9  4b

4a

7  4a

d

8

Fig. 9

G-H

63a

33a

7  4a

H

33b  4c  4b

Fig. 8

0 093 894

Fig 12

Fig 13

Fig 14

Fig 15

Fig 16

Fig 17

Fig 18

Fig 19

N - O

L - M

J - K

G - H

E - F

C - D

Schnitt A - B

4